# EUROPÄISCHE PATENTSCHRIFT

(11) **EP 1 516 814 B1**
(45) Veröffentlichungstag und Bekanntmachung des Hinweises auf die Patenterteilung: **15.11.2006**
(21) Anmeldenummer: 04018811.2
(22) Anmeldetag: 09.08.2004
(51) Int. Cl.: B64G 1/22

(54) **Bergungsvorrichtung**
Recovery device
Dispositif de récupération

(30) Priorität: 17.09.2003 DE 10342954
(43) Veröffentlichungstag der Anmeldung: 23.03.2005
(73) Patentinhaber: EADS Space Transportation GmbH, 28199 Bremen (DE)
(72) Erfinder: Bischof, Bernd, 27777 Ganderkesee (DE); Starke, Jürgen, 28355 Bremen (DE); Günther, Hansjürgen, 28717 Bremen (DE); Foth, Peter, 28844 Weyhe-Leeste (DE); Kerstein, Lothar, 27367 Sottrum (DE)
(74) Vertreter: Hansmann, Dierk

(56) Entgegenhaltungen:
- US-A- 5 279 482
- DATABASE WPI Section PQ, Week 199549 Derwent Publications Ltd., London, GB; Class Q25, AN 1995-377542 XP002304269 & JP 07 251799 A (TOSHIBA KK) 3. Oktober 1995 (1995-10-03)

## Beschreibung

Die Erfindung betrifft eine Bergungsvorrichtung für frei im All fliegende Objekte, mit einem über eine Leine mit einem Raumfahrzeug verbindbaren, von diesem zu startenden und sich selbsttätig entfaltenden und wieder verschließenden Fangnetz, das an seinem äußeren Rand mit wenigstens vier Führungsgewichten versehen und gemeinsam mit diesen in einem Gehäuse angeordnet ist und wobei die Führungsgewichte über einen zugeordneten Auswurfmechanismus unter einem Winkel zur Bewegungsrichtung des Fangnetzes aus dem Gehäuse beschleunigbar sind.

Vorrichtungen dieser Art haben die Funktion, frei im Weltall fliegende Zielobjekte, beispielsweise einen Satelliten, die Oberstufe einer Rakete oder aber eine beliebige andere Art von Weltraummüll, einzufangen. Daneben können diese Vorrichtungen aber auch zur Rettung von Astronauten dienen, die nicht über eine Halteleine mit einem Raumfahrzeug verbunden sind und die antriebslos von diesem wegzutreiben drohen. Aktiviert werden solche Vorrichtungen im allgemeinen von der im All befindlichen Orbitalplattform aus. So sind für diesen Verwendungszweck bereits eine Reihe vergleichsweise komplexer Robotiksysteme bekannt geworden. Daneben ist aus der DATABASE WPI Section PQ, Week 199549 Derwent Publications Ltd., London, GB; Class Q25, AN 1995-377542 XP002304269 & JP 07 251799 A (TOSHIBA KK) 3. Oktober 1995 (1995-10-03) eine Vorrichtung der eingangs genannten Art bekannt geworden, bei der ein Fangnetz an seinem äußeren Rand mit Führungsgewichten versehen ist und bei der dieser Anordnung beim Start aus einer zugeordneten Abschußvorrichtung ein Drall derart vermittelt wird, daß sich das Fangnetz aufgrund der auf die Gewichte einwirkenden zentrifugalkräfte selbsttätig öffnet. Vor dem Start wird bei dieser bekannten Vorrichtung das Gehäuse, in dem das Fangnetz und die Führungsgewichte gemeinsam gelagert sind, von einem Manipulator aus einer vorratshalterung auf dem Raumfahrzeug abgenommen und zum Einsatz in bezug auf die Lage und Ausrichtung genau positioniert. Anschließend wird das Fangnetz zusammen mit den Führungsgewichten um die Behälterlängsachse in Rotation versetzt und sodann mittels Federkraft aus dem Behälter heraus beschleunigt. Beim Vorbeiflug des Netzes an dem einzufangenden Objekt soll sich bei dieser bekannten Vorrichtung das Netz am Objekt festhaken und es soll durch eine Rotationskontraktion der Beschleunigungsgewichte zur Drehachse hin erreicht werden, daß sich das Netz in Bewegungsrichtung hinter dem Objekt selbsttätig verschließt und das Objekt auf diese weise eingefangen wird.

Aufgabe der Erfindung ist es, eine derartige Vorrichtung so auszubilden, daß sie möglichst einfach und robust aufgebaut ist und zugleich möglichst zuverlässig und für das einzufangende Objekt schonend arbeitet.

Die Erfindung löst diese Aufgabe dadurch, daß bei einer derartigen Vorrichtung vorsieht, daß die Führungsgewichte im Gehäuse auf einem Kreis äquidistant und unter einem Winkel zur Längsachse des Gehäuses in dessen äußerem Randbereich angeordnet und jeweils über eine zugeordnete Feder beschleunigbar sind und daß in wenigstens zwei der Führungsgewichte Mechanismen zum Verschließen des Fangnetzes hinter einem Zielobjekt integriert sind. In einer Ausführungsform wird nach einer vorbestimmten Zeitspanne ein das Fangnetz umspannendes Seil von dem in zwei der vier Führungsgewichte vorgesehenen Mechanismus eingerollt und somit das einzufangende Objekt umschlossen und ein Verlieren zuverlässig verhindert.

Die erfindungsgemäße Vorrichtung weist unter anderem den Vorteil auf, daß zu ihrem Start keine weiteren Manipulationen erforderlich sind. Vielmehr sind die einzelnen Fangnetze in ihren Behältern fest auf der Satellitengrundstruktur befestigt und werden auch direkt von dieser Position aus gestartet. Durch die erfindungsgemäß vorgesehene kontrollierte Art des wiederverschließens des Netzes mittels eines eigens zu diesem Zweck in den Führungsgewichten vorgesehenen Mechanismus eignet sich diese Vorrichtung insbesondere auch für das Bergen von Personen d.h. von Astronauten. Durch die in vorteilhafter weiterbildung der Erfindung vorgesehene Einstellbarkeit der Länge und der Zugkräfte des das Fangnetz mit der Raumstation verbindenden zugseiles kann zudem jederzeit ein sicherer Abstand zwischen dem Zielobjekt und dem Raumfahrzeug, von dem aus die Bergungsvorrichtung gestartet wird, eingehalten werden.

Nachfolgend soll die Erfindung anhand eines in der Zeichnung dargestellten Ausführungsbeispiels näher erläutert werden. Es zeigen:
- Fig. 1 und 2: eine mit einer Reihe von Bergungsvorrichtungen ausgerüstete Weltraumplattform,
- Fig. 3 und 4:: eine der Bergungsvorrichtungen gemäß der Darstellung in Fig. 1 und 2,
- Fig. 5:: die Bergungsvorrichtungen gemäß den Figuren 3 und 4 in einer Schnittdarstellung,
- Fig. 6 und 7:: Detaildarstellungen der Bergungsvorrichtung gemäß den Figuren 3 und 4 in zwei unterschiedlichen Zuständen und
- Fig. 8 und 9:: eine Anordnung gemäß Fig. 1 in zwei verschiedenen Stadien ihres Einsatzes.

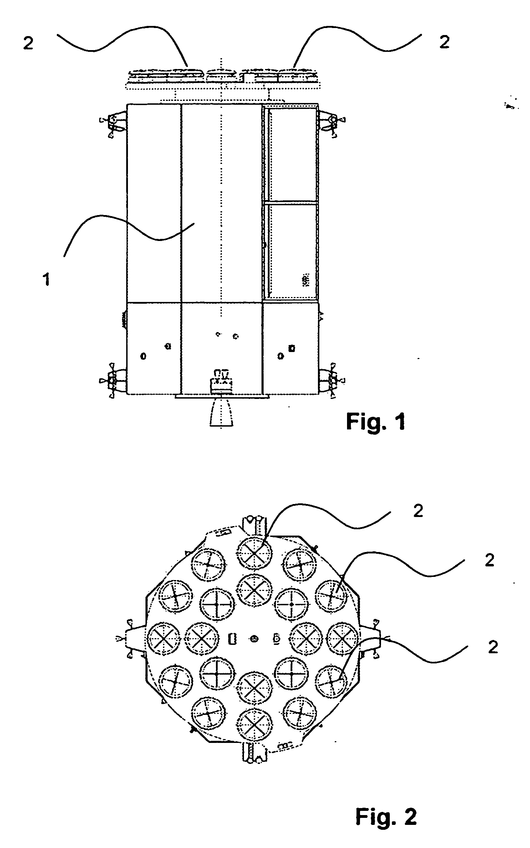

Die in Fig. 1 und 2 gezeigte Weltraumplattform 1 ist mit einer Reihe von Bergungsvorrichtungen 2 ausgerüstet, die für das Einfangen und den Transport von frei im All fliegenden Objekten einsetzbar sind. Zu letzteren zählen unter anderem abgeschaltete Systeme, die nicht wieder aktiviert werden sollen, wie beispielweise Satelliten, deren Lebensdauer abgelaufen ist, oder ausgebrannte Raktenoberstufen. Daneben können diese Bergungsvorrichtungen aber auch zur Rettung von Astronauten verwendet werden. Die Plattform 1 führt im Fall des hier dargestellten Ausführungsbeispiels einen Vorrat von etwa zwanzig derartigen Bergungsvorrichtungen 2 mit, die nachfolgend anhand der Figuren 2 bis 9 im Detail beschrieben werden sollen.

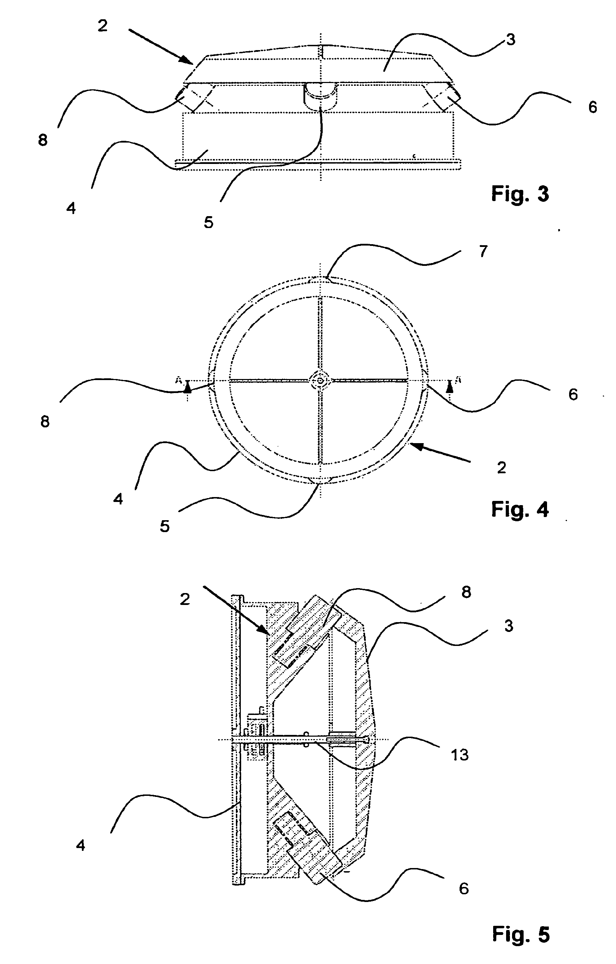

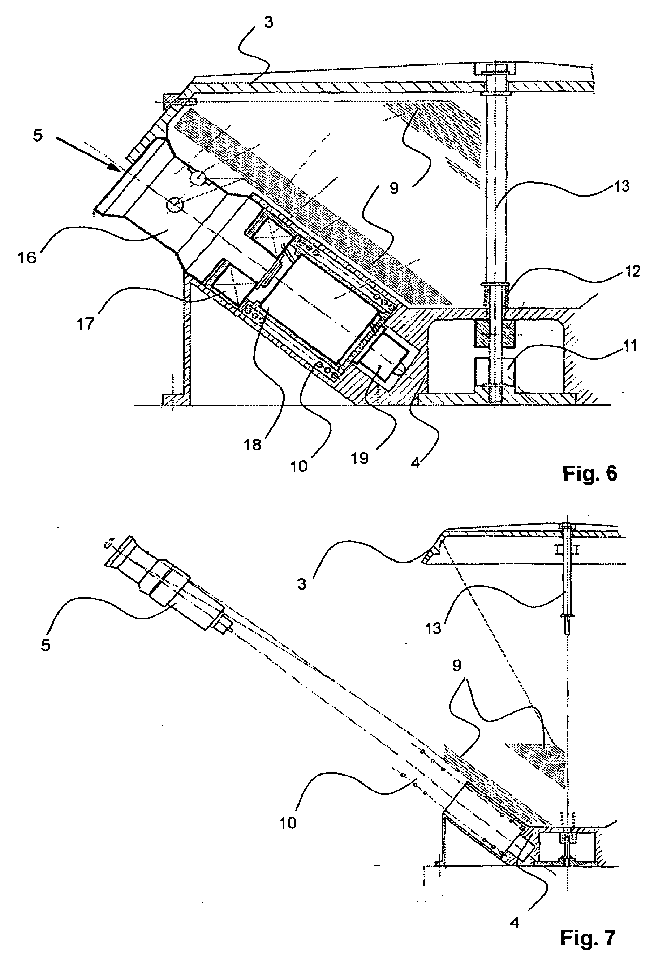

Bei der in den Figuren 3 und 4 gezeigten Bergungsvorrichtung 2 sind unter einer Abdeckung 3 in einem Gehäuse 4 insgesamt vier Führungsgewichte 5 bis 8 angeordnet, die gemeinsam ein Fangnetz 9 aufspannen. Zu diesem Zweck sind die Führungsgewichte 5 bis 8 in den äußeren Randbereich des Netzes 9 integriert. Das Netz 9 ist vor dem Start bzw. dem Auslösen der Anordnung zusammengefaltet im Inneren des Gehäuses 4 untergebracht. Die Führungsgewichte 5 bis 8 sind, wie insbesondere in den Figuren 6 und 7 zu erkennen, auf einem Kreis äquidistant und unter einem Winkel zur Längsachse des Gehäuses 4 in dessen äußerem Randbereich angeordnet.

Jedes der im Fall des hier beschriebenen Ausführungsbeispiels vier Führungsgewichte 5 - 8 besitzt eine Masse von etwa einem kg und wird über eine zugeordnete Spiralfeder 10 beschleunigt, die bei einer Öffnung der Abdeckung 3 ausgelöst wird und die das jeweilige Führungsgewicht in eine Richtung beschleunigt, die unter einem Winkel zur vorgesehenen Flugbahn des Netzes 9 radial nach außen verläuft. Zur Initiierung dieser Öffnung der Abdeckung 3 sind ein Bolzenschneider 11 sowie eine weitere, im Zentrum des Gehäuses 4 angeordnete Feder 12 vorgesehen.

Nach dem Durchtrennen der Halterung für die mit der Abdeckung 3 verbundene, von der Spiralfeder 12 beaufschlagte Stange 13, durch den Bolzenschneider 11 entfalten die vier Führungsgewichte 5 - 8, durch die zugeordneten Federn 10 beschleunigt, das Netz 9, das mit der Abdeckung 3 verbunden ist. Das Fangnetz 9 ist seinerseits über ein im Fall des hier beschriebenen Ausführungsbeispiels 60 Meter langes Seil 14 mit einer an der Orbitalplattform 1 angeordneten ansteuerbaren Rolle verbunden. Diese Rolle wird in einem geschlossenen Regelkreis durch einen Motor, ein Zugkraftmesser, den Bordcomputer der Weltraumplattform 1 sowie durch eine Bodenkontrolle kontrolliert und gesteuert.

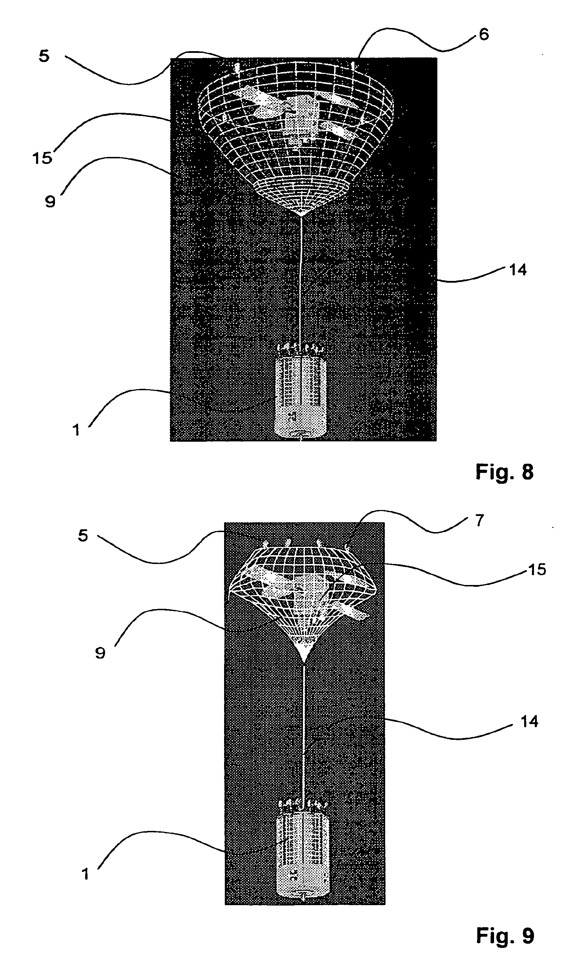

Sobald das Netz 9 ein einzufangendes Zielobjekt 15 erreicht und teilweise umschlossen hat, werden dafür vorgesehene Mechanismen, die im Fall des hier beschriebenen Ausführungsbeispiels in zwei der vier Führungsgewichte 5 - 8 integriert sind und von denen einer in Fig. 6 erkennbar ist, aktiviert, um das Netz 9 über bzw. hinter dem Zielobjekt 15 zu schließen. Die Mechanismen bestehen dabei jeweils aus einem Rotor 16, der über einen Elektromotor 17 mit geringen Abmessungen, einem sogenannten spin drive, angetrieben wird, einer Batterie 18 sowie einem Mikroschalter 19. Letztere aktivieren einen Zeitschalter, um beispielsweise nach einer Zeitdauer von etwa 60 Sekunden die Motoren 17 zu starten, so daß diese eine im Randbereich des Netzes 9 zwischen den Gewichten angeordnete Schnur, die alle vier Führungsgewichte 5 - 8 miteinander verbindet, aufzurollen beginnen und so das Netz 9, wie in Fig. 9 erkennbar ist, so weit schließen, daß das Zielobjekt 15 bei weiteren oder gegenläufigen Rotationsbewegungen nicht wieder freigegeben wird und verloren gehen kann. Dazu sind die Antriebe in den Führungsgewichten 5 mit Vorrichtungen zur Rückdrehsicherung wie z.B. Schneckentriebe oder Spindeltriebe ausgerüstet.

Die Netze 9 der einzelnen Bergungsvorrichtungen 2 können unterschiedliche Durchmesser von etwa 10, 15 oder mehr Metern sowie angepasste Maschengrößen von etwa 0,3 bis 0,5 Metern aufweisen und damit für unterschiedliche Größen von Zielobjekten 15 geeignet sein. Jedes Netz 9 ist über ein Seil 14, das im Fall des hier beschriebenen Ausführungsbeispiels eine Länge von etwa 60 Metern und eine Stärke von etwa einem Millimeter aufweist, mit der Orbitalplattform 1 verbunden. Die auf der Orbitalplattform 1 befindliche ansteuerbare Winde mit Motor dient dazu, die Seillänge und die Zugkräfte sowohl während des Bergungsvorganges und der dabei notwendigen Stabilisierung des eingefangenen als auch während möglicher nachfolgender Transportvorgänge zu kontrollieren bzw. zu steuern. Ihr zugeordnet sind ferner ein Zugkraftmesser und ein Bolzenschneider. Ein Visualisierungssystem in Form einer Kamera ermöglicht es schließlich einem Bediener, den Einfangprozess zu beobachten und zu steuern.

Nach Beendigung einer solchen Mission und nach dem Transfer des Zielobjektes 15, z.B. eines Satelliten, in einen sogenannten Friedhofsorbit, kann das Netz 9 einschließlich des Seiles 14 von der Oritalplattform 1 aus abgetrennt werden.

## Patentansprüche

1. Bergungsvorrichtung für frei im All fliegende Objekte, mit einem über eine Leine (14) mit einem Raumfahrzeug (1) verbindbaren, von diesem zu startenden und sich selbsttätig entfaltenden und wieder verschließenden Fangnetz (9), das an seinem äußeren Rand mit wenigstens vier Führungsgewichten (5-8) versehen und gemeinsam mit diesen in einem Gehäuse (4) angeordnet ist und wobei die Führungsgewichte (5 - 8) über einen zugeordneten Auswurfmechanismus unter einem Winkel zur Bewegungsrichtung des Fangnetzes (9) aus dem Gehäuse (4) beschleunigbar sind, und im Gehäuse (4) auf einem Kreis äquidistant angeordnet sind, **dadurch gekennzeichnet, daß** die Führungsgewichte (5 - 8) unter einem Winkel zur Längsachse des Gehäuses (4) in dessen äußerem Randbereich angeordnet und jeweils über eine zugeordnete Feder (10) beschleunigbar sind und daß in wenigstens zwei der Führungsgewichte (5 - 8) Mechanismen zum Verschließen des Fangnetzes (9) hinter einem Zielobjekt (15) integriert sind.

2. Vorrichtung nach Anspruch 1, **dadurch gekennzeichnet, daß** die Führungsgewichte (5 - 8) beim Auslösen des Netzes gleichzeitig freigebbar sind.

3. Vorrichtung nach Anspruch 2, **dadurch gekennzeichnet, daß** die Führungsgewichte (5 - 8) sowie das Fangnetz (9) unter einer mit dem Fangnetz (9) verbundenen Abdeckung (3) des Gehäuses (4) angeordnet sind, die ihrerseits über eine zugeordnete Feder (12) beaufschlagbar ist.

4. Vorrichtung nach einem der Ansprüche 1 bis 3, **dadurch gekennzeichnet, daß** die Mechanismen zum Verschließen des Fangnetzes (9) jeweils aus einem über einen Elektromotor (17) angetriebenen Rotor (16), einer Batterie (18) sowie einem Mikroschalter 19 bestehen, wobei die Rotoren (16) auf eine die Führungsgewichte (5 - 8) miteinander verbindende Schnur wirken.

5. Vorrichtung nach Anspruch 4, **dadurch gekennzeichnet, daß** die Mechanismen jeweils einen zugeordneten voreinstellbaren Startverzögerungsmechanismus aufweisen.

6. Vorrichtung nach einem der Ansprüche 1 bis 5, **dadurch gekennzeichnet, daß** das die Bergungsvorrichtung mit dem Raumfahrzeug verbindende Seil (14) in seiner Länge und seinen Zugkräften einstellbar ist.

7. Vorrichtung nach Anspruch 6, **dadurch gekennzeichnet, daß** der Abstand zwischen der Bergungsvorrichtung und dem Raumfahrzeug über die Länge und die Zugkräfte des Seiles (14) regelbar ist.

8. Vorrichtung nach Anspruch 6 und 7, **dadurch gekennzeichnet, daß** das Seil (17) nach dem Transport des zu bergenden Objektes (15) an seinen Zielort vom Raumfahrzeug abtrennbar ist.

## Claims

1. Recovery device for objects flying freely in space, with an arresting net (9) which can be connected by a line (14) to a spacecraft (1), is to be actuated by the latter, automatically unfolds and closes again, is provided at its outer edge with at least four guide weights (5 - 8) and is disposed together with these in a housing (4), and wherein the guide weights (5 - 8) can be accelerated out of the housing (4) by an associated ejection mechanism at an angle to the direction of movement of the arresting net (9) and are disposed equidistantly on a circle in the housing (4), **characterised in that** the guide weights (5 - 8) are disposed at an angle to the longitudinal axis of the housing (4) in the outer edge region thereof and can in each case be accelerated by an associated spring (10), and that mechanisms for closing the arresting net (9) behind a target object (15) are integrated into at least two of the guide weights (5 - 8).

2. Device according to Claim 1, **characterised in that** the guide weights (5 - 8) can be simultaneously released when the net is deployed.

3. Device according to Claim 2, **characterised in that** the guide weights (5 - 8) as well as the arresting net (9) are disposed under a cover (3), which is connected to the arresting net (9), of the housing (4), which cover can in turn be acted upon by an associated spring (12).

4. Device according to any one of Claims 1 to 3, **characterised in that** the mechanisms for closing the arresting net (9) in each case consist of a rotor (16), which is driven by an electric motor (17), a battery (18) as well as a microswitch (19), wherein the rotors (16) act on a cord which connects the guide weights (5 - 8) together.

5. Device according to Claim 4, **characterised in that** the mechanisms in each case comprise an associated actuation delay mechanism which can be preset.

6. Device according to any one of Claims 1 to 5, **characterised in that** the cable (14) which connects the recovery device to the spacecraft can be adjusted in terms of its length and its tensile forces.

7. Device according to Claim 6, **characterised in that** the distance between the recovery device and the spacecraft can be regulated via the length and the tensile forces of the cable (14).

8. Device according to Claims 6 and 7, **characterised in that** the cable (17) can be separated from the spacecraft after the object (15) which is to be recovered has been transported to its destination.

## Revendications

1. Dispositif de récupération d'objets volant librement dans l'espace, comportant un filet de capture (9) raccordable par un câble (14) à un engin spatial (1), partant de celui-ci et se déployant et se refermant automatiquement, ledit filet de capture étant pourvu sur son bord extérieur d'au moins quatre poids de guidage (5 à 8) et étant aménagé conjointement avec ceux-ci dans un boîtier (4), et dans lequel les poids de guidage (5 à 8) peuvent être accélérés via un mécanisme d'éjection correspondant sous un certain angle par rapport à la direction de déplacement du filet de capture (9) hors du boîtier (4) et sont agencés dans le boîtier (4) à équidistance sur un cercle, **caractérisé en ce que** les poids de guidage (5 à 8) sont agencés sous un certain angle par rapport à l'axe longitudinal du boîtier (4) dans sa zone de bord externe et peuvent être respectivement accélérés via un ressort correspondant (10), et **en ce que** des mécanismes pour fermer le filet de récupération (9) derrière un objet cible (15) sont intégrés à au moins deux des poids de guidage (5 à 8).

2. Dispositif selon la revendication 1, **caractérisé en ce que** les poids de guidage (5 à 8) sont en même temps libérables lors du déploiement du filet.

3. Dispositif selon la revendication 2, **caractérisé en ce que** les poids de guidage (5 à 8) ainsi que le filet de capture (9) sont agencés sous un couvercle (3) du boîtier raccordé au filet de capture (9), lequel couvercle peut, pour sa part, être sollicité par un ressort correspondant (12).

4. Dispositif selon l'une quelconque des revendications 1 à 3, **caractérisé en ce que** les mécanismes permettant de fermer le filet de capture (9) sont respectivement constitués d'un rotor (16) entraîné par un moteur électrique (17), d'une batterie (18) ainsi que d'un microrupteur (19), les rotors (16) agissant sur un cordon raccordant les poids de guidage (5 à 8) les uns aux autres.

5. Dispositif selon la revendication 4, **caractérisé en ce que** les mécanismes présentent respectivement un mécanisme retardateur de lancement préréglable correspondant.

6. Dispositif selon l'une quelconque des revendications 1 à 5, **caractérisé en ce que** le câble (14) qui raccorde le dispositif de récupération à l'engin spatial est réglable en longueur et en forces de traction.

7. Dispositif selon la revendication 6, **caractérisé en ce que** l'on peut régler la distance entre le dispositif de récupération et l'engin spatial via la longueur et les forces de traction du câble (14).

8. Dispositif selon les revendications 6 et 7, **caractérisé en ce que** l'on peut séparer le câble (17) de l'engin spatial après transport à sa destination de l'objet à récupérer (15).
